(19) Europäisches Patentamt
European Patent Office
Office européen des brevets

(11) **EP 2 113 460 B1**

(12) **FASCICULE DE BREVET EUROPEEN**

(45) Date de publication et mention
de la délivrance du brevet:
**01.02.2012 Bulletin 2012/05**

(21) Numéro de dépôt: **09158935.8**

(22) Date de dépôt: **28.04.2009**

(51) Int Cl.:
***B64G 1/10*** *(2006.01)*    ***B64G 1/28*** *(2006.01)*
***B64G 1/38*** *(2006.01)*    ***G05D 1/08*** *(2006.01)*
***B64G 1/36*** *(2006.01)*

(54) **Procédé de caractérisation des vibrations pour un satellite d'observation.**

Charakterisierungsverfahren von Schwingungen für einen Beobachtungssatelliten

Method for characterising vibrations for an observation satellite.

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **30.04.2008 FR 0852960**

(43) Date de publication de la demande:
**04.11.2009 Bulletin 2009/45**

(73) Titulaire: **Centre National d'Etudes Spatiales 75001 Paris (FR)**

(72) Inventeurs:
• **Kubik, Philippe**
**31320, CASTANET-TOLOSAN (FR)**
• **Puig, Olivier**
**31400, TOULOUSE (FR)**
• **Lebegue, Laurent**
**31320, CASTANET-TOLOSAN (FR)**
• **Montel, Johan**
**81470, MAURENS-SCOPONT (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
• **JANSCHEK K ET AL: "Integrated camera motion compensation by real-time image motion tracking and image deconvolution" ADVANCED INTELLIGENT MECHATRONICS. PROCEEDINGS, 2005 IEEE/ASME INTERNA TIONAL CONFERENCE ON MONTEREY, CA JULY 24-28, 2005, PISCATAWAY, NJ, USA,IEEE, 24 juillet 2005 (2005-07-24), pages 1437-1444, XP010837963 ISBN: 978-0-7803-9047-8**
• **ROQUES S ET AL: "Satellite attitude instability effects on stereo images" ACOUSTICS, SPEECH, AND SIGNAL PROCESSING, 2004. PROCEEDINGS. (ICASSP ' 04). IEEE INTERNATIONAL CONFERENCE ON MONTREAL, QUEBEC, CANADA 17-21 MAY 2004, PISCATAWAY, NJ, USA,IEEE, vol. 3, 17 mai 2004 (2004-05-17), pages 477-480, XP010718230 ISBN: 978-0-7803-8484-2**

## Description

L'invention a pour domaine celui des satellites d'observation et plus particulièrement des satellites d'observation de la surface terrestre.

Un satellite d'observation de la surface terrestre, orbitant autour de la terre, est muni d'un système imageur constitué d'un détecteur ainsi que des moyens électroniques et informatiques permettant l'acquisition d'images.

De plus, le satellite est équipé d'un système d'attitude comportant des actionneurs ainsi que des moyens électroniques et informatiques de commande et de contrôle permettant d'orienter le satellite par rotation autour de son centre de gravité. Ces actionneurs comportent des éléments mobiles dont le mouvement est contrôlé pour faire tourner le satellite par effet de réaction. On utilise généralement des roues à réaction disposées selon plusieurs axes fixes par rapport au satellite, ou, pour les satellites très agiles, des actionneurs gyroscopiques. Un actionneur gyroscopique comporte une toupie mobile en rotation à une vitesse réglable et maintenue par un cadre apte à pivoter. Lorsque l'on pivote le cadre pour modifier l'orientation de l'axe de rotation de la toupie, la force de réaction générée permet de modifier l'attitude du satellite par rapport à un référentiel inertiel de référence.

Le mouvement de rotation des toupies des actionneurs gyroscopiques génère des vibrations, généralement ayant une fréquence élevée de l'ordre de 100 Hz, qui se propagent à l'ensemble du satellite et en particulier au système imageur. Ces vibrations, dont les caractéristiques dépendent de la vitesse de rotation des toupies, dégradent la qualité des images obtenues en les rendant floues et/ou distordues. On dit alors que l'image est perturbée géométriquement.

Jusqu'à présent, la boucle de régulation de l'attitude du satellite ne permet de connaître que les caractéristiques des vibrations dont la fréquence est relativement faible, typiquement inférieure à 16 Hz. Au-delà de cette fréquence, les vibrations sont subies et dégradent la qualité des images obtenues.

On connaît des procédés de mesure de la qualité des images destinés à évaluer les perturbations géométriques.

Selon un premier procédé de l'art antérieur, on observe différents sites terrestres comportant un grand nombre de points dont les coordonnées sont précisément connues. On déduit de l'analyse des images obtenues l'amplitude des oscillations essentiellement basses fréquences de l'axe de visée du système imageur.

Selon un second procédé utilisé pour étudier la stabilité de la ligne de visée du système imageur, on utilise des techniques de corrélation d'au moins deux images d'un même site terrestre quelconque. Le document JANSCEK K et al: « Integrated camera motion compensation by real-time image motion tracking and image deconvolution » ADVANCED INTELLIGENT MECHATRONICS. PROCEEDINGS, 2005 IEEE/ASME INTERNATIONAL CONFERENCE ON MONTEREY, CA JULY 24-28, 2005, PISCATAWAY, NJ, USA, IEEE, 24 juillet 2005 (2005-07-24), pages 1437-1444, XP010837963 ISBN : 978-0-7803-9047-8 » décrit un tel procédé.

Ces procédés nécessitent l'acquisition d'images, souvent en grand nombre, de sites terrestres qui ne sont pas toujours visibles depuis l'espace à cause de la couverture nuageuse. Les images obtenues doivent ensuite être traitées au moyen d'algorithmes mathématiques complexes. Ces procédés sont donc longs et coûteux à mettre en oeuvre.

L'invention a donc pour but de pallier aux problèmes précités en proposant un procédé simple d'évaluation de l'amplitude des vibrations ayant une influence lors de l'acquisition d'images de manière à optimiser la qualité des images obtenues.

Pour cela l'invention porte sur un procédé de caractérisation des vibrations affectant un satellite d'observation équipé d'un système imageur ayant un axe de visée et d'un système d'attitude permettant d'orienter l'axe de visée du système imageur. Le procédé comporte les étapes consistant à :

- sélectionner une étoile dans une liste d'étoiles observables au moyen du système imageur ;
- extraire des première et seconde coordonnées de l'étoile sélectionnée selon des première et seconde directions ;
- orienter le satellite au moyen du système d'attitude de manière à ce que l'axe de visée du système imageur pointe selon la première coordonnée et balaie, selon la seconde direction, une fenêtre située autour de la seconde coordonnée de l'étoile sélectionnée;
- acquérir une image au moyen du système imageur durant le balayage selon la seconde direction de ladite fenêtre, l'image obtenue présentant une traînée correspondant à l'étoile sélectionnée ; et
- analyser l'image obtenue pour déterminer, à partir des oscillations de la traînée, une caractéristique des vibrations affectant le satellite.

Suivant des modes particuliers de l'invention, le procédé comporte une ou plusieurs des caractéristiques suivantes prises isolément ou suivant toutes les combinaisons techniquement possibles :

- les étapes d'orientation du satellite, d'acquisition d'une image et d'analyse de l'image obtenue sont répétées pour des valeurs différentes de la vitesse de mouvement d'un élément mobile d'un dispositif embarqué à bord du satellite dont la vitesse de mouvement est réglable.
- le dispositif mécanique est constitué par des actionneurs gyroscopiques du système d'attitude du satellite qui comportent des toupies dont la vitesse de rotation est réglable.

- une fois qu'une dépendance entre une caractéristique des vibrations et la vitesse de mouvement de l'élément mobile est établie sur un intervalle de vitesse de mouvement, la vitesse de mouvement de l'élément mobile est réglée à la valeur qui induit les plus faibles dégradations de la qualité des images.
- le procédé comporte une étape de détermination d'une vitesse de balayage pour balayer la fenêtre selon la seconde direction et d'une durée pour l'étape d'acquisition d'image.
- la détermination d'une vitesse de balayage et la détermination d'une durée sont telles que le produit de ces deux paramètres est supérieur à une précision angulaire de pointage du système d'attitude.
- la détermination de la vitesse de balayage prend en compte un nombre de lignes minimum de l'image obtenue ayant au moins un pixel éclairé par l'étoile sélectionnée.
- le procédé est mis en oeuvre lorsque le satellite se situe sur une portion nuit de son orbite.
- la liste d'étoiles observables est obtenue par extraction à partir d'un catalogue général d'étoiles donnant, entre autres, les positions et la magnitude des étoiles, et à partir des caractéristiques physiques du système imageur, telles que le temps d'échantillonnage.
- la caractéristique des vibrations comprend un paramètre des vibrations parmi une amplitude, une fréquence et un spectre.

L'invention porte également sur un satellite d'observation équipé d'une installation pour la caractérisation des vibrations affectant le satellite d'observation équipé d'un système imageur ayant un axe de visée et d'un système d'attitude permettant d'orienter l'axe de visée du système imageur. L'installation permet la mise en oeuvre du procédé présenté ci-dessus, et comporte :

- une liste d'étoiles observables au moyen du système imageur ;
- un moyen de sélection d'une étoile dans ladite liste ;
- un moyen d'extraction des première et seconde coordonnées de l'étoile sélectionnée selon des première et seconde directions ;
- un moyen d'élaboration d'un profil d'attitudes pour que, lorsque le profil d'attitudes est suivi, le système d'attitude du satellite oriente le satellite de sorte que l'axe de visée du système imageur pointe vers la première coordonnée et balaie, selon la seconde direction, une fenêtre située autour de la seconde coordonnée de l'étoile sélectionnée; le système imageur permettant l'acquisition d'une image durant le balayage selon la seconde direction de ladite fenêtre, l'image obtenue présentant une traînée correspondant à l'étoile sélectionnée, et,
- un moyen d'analyse permettant de déterminer, à partir des oscillations de la traînée sur l'image obtenue, au moins une caractéristique des vibrations affectant le satellite.

L'invention et ses avantages seront mieux compris à la lecture de la description qui va suivre, donnée uniquement à titre d'exemple, et faite en se référant aux dessins annexés, dans lesquels :

- la figure 1 est une vue générale schématique d'un satellite d'observation de la surface terrestre ;
- la figure 2 est un organigramme représentant les étapes d'un mode de réalisation préféré du procédé d'évaluation des vibrations selon l'invention ; et,
- la figure 3 est une simulation informatique de l'image brute d'une étoile obtenue lors de la mise en oeuvre du procédé de la figure 2.

Dans la lignée des satellites SPOT, le projet PLEIADES constitue une nouvelle génération de satellites d'observation optique de la surface terrestre à haute résolution que la demanderesse a la charge de développer.

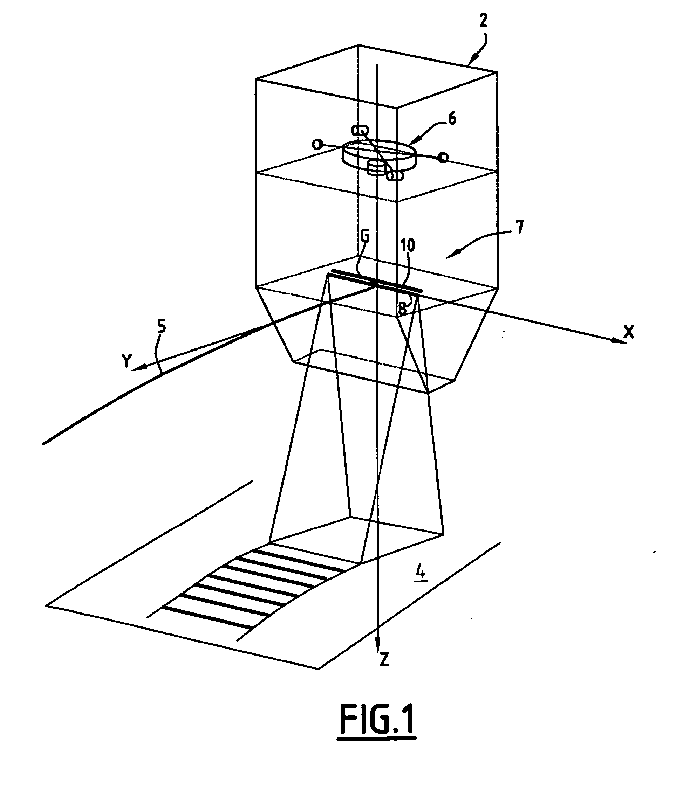

En se référant à la figure 1, un satellite 2 d'observation de la surface terrestre 4 se déplace le long d'une orbite prédéfinie 5. Le satellite 2 comporte un système d'attitude 6 pour orienter le satellite 2. L'orientation du satellite 2 est donnée par l'orientation d'un repère de visée X, Y, Z lié au satellite 2 par rapport à un repère inertiel de référence lié aux étoiles. Sur la figure 1, le repère de visée X, Y, Z est représenté attaché au centre de gravité G du satellite 2.

Le satellite 2 comporte un système imageur 7 pour l'acquisition d'images. -Selon le projet PLEIADES, le système imageur 7 comprend un détecteur comportant une optique, pour collecter un flux lumineux, et deux capteurs du type CCD (« Charge-Coupled Device » ou capteur à couplage de charge) disposés dans le plan focal X, Y de l'optique. L'axe optique du système imageur 7, ou axe de visée, est confondu avec l'axe Z du repère de visée.

Le premier capteur 8 du type CCD est constitué par une rangée de pixels alignés parallèlement à la première direction X. Ce premier capteur comporte environ 30 000 pixels de manière à offrir une haute résolution panchromatique. Le champ angulaire élémentaire couvert par ce premier détecteur est de 13 $\mu$rad selon la seconde direction Y du repère de visée.

Le second détecteur 10 du type CCD est constitué par l'alignement de 7 500 pixels selon la première direction X. Ce second détecteur possède une résolution plus faible et un champ angulaire élémentaire de 4 $\mu$rad selon la seconde direction Y. Ce second détecteur est destiné à réaliser des images de la surface terrestre dans des bandes de longueur d'onde particulières.

L'optique du système imageur 7 comporte des moyens adaptés pour que les rayons lumineux collectés soient incidents sur l'un et/ou sur l'autre des premier et second détecteurs 8, 10.

Pour acquérir l'image d'un site terrestre, le satellite 2 reçoit, d'une station de contrôle au sol, un programme de mission comportant notamment un profil d'attitudes. Un profil d'attitudes est une succession temporelle de consignes d'attitude. Lors de l'exécution de ce programme de mission, les différentes consignes d'attitude sont appliquées séquentiellement en entrée du système d'attitude 6 du satellite 2 pour que celui-ci oriente convenablement le satellite 2 au cours de la prise de vue.

Plus précisément, mais tout en restant schématique, le profil d'attitudes comporte une position de pointage initiale et une vitesse de balayage. Pour simplifier la description qui va suivre, on repère les objets dans le plan XY. L'homme du métier connaît les transformations mathématiques qui permettent de passer d'un système de coordonnées à un autre.

Ainsi, l'on considère que la position de pointage initiale est donnée par une première coordonnée Xi selon la première direction X et une seconde coordonnée Yi selon la seconde direction Y, et que la vitesse de balayage $\Omega i$ est donnée par une vitesse selon la seconde direction Y. Là encore, l'homme du métier comprendra que le système d'attitude du satellite peut être commandé de manière à réaliser une succession d'orientations plus complexe, en considérant que la vitesse angulaire $\Omega i$ est un vecteur de norme et d'orientation variables dans un repère inertiel.

Au début de la mission, le satellite est orienté de sorte que la position de pointage initiale Xi, Yi soit ramenée sur l'axe de visée Z, c'est-à-dire au centre du plan focal X, Y du système imageur. Puis, le satellite est orienté de manière à avoir une vitesse de balayage selon la seconde direction Y égale à $\Omega i$ pour balayer la surface au sol. La vitesse de balayage $\Omega i$ est adaptée pour qu'une bande élémentaire de la surface du sol, observée par le système imageur à un instant donné, et la bande élémentaire de la surface du sol voisine, observée par le système imageur à l'instant d'échantillonnage suivant, soient bord à bord. La juxtaposition de ces différentes bandes élémentaires permet d'obtenir, de proche en proche, une image de la surface du sol.

Pour l'observation d'un site terrestre, la vitesse de balayage $\Omega i$ est fixée à une valeur qui tient compte de l'altitude de l'orbite 5. Elle est typiquement de 10 m rad/s.

Le système d'attitude 6 du satellite 2 est muni d'actionneurs gyroscopiques. Le mouvement de rotation des toupies des actionneurs gyroscopiques à la vitesse de rotation $\omega$ génère des vibrations qui engendrent des variations temporelles de l'orientation de l'axe de visée Z autour de son orientation théorique.

Le procédé selon l'invention permet d'évaluer les caractéristiques du mouvement de l'axe de visée Z en fonction de la vitesse de rotation $\omega$ des toupies. La vitesse de rotation des toupies est ensuite ajustée à la vitesse de rotation qui induit les plus faibles dégradations de la qualité des images de la surface du sol.

Selon l'invention, le satellite 2 exécute un programme de mission consistant à observer une étoile sélectionnée dont on connaît la position exacte tout en orientant le satellite avec une vitesse de balayage adaptée pour obtenir une image comportant, non pas une trace ponctuelle de l'étoile, mais une traînée selon la direction de balayage. La traînée présente des ondulations dont l'analyse permet d'évaluer tes caractéristiques des vibrations.

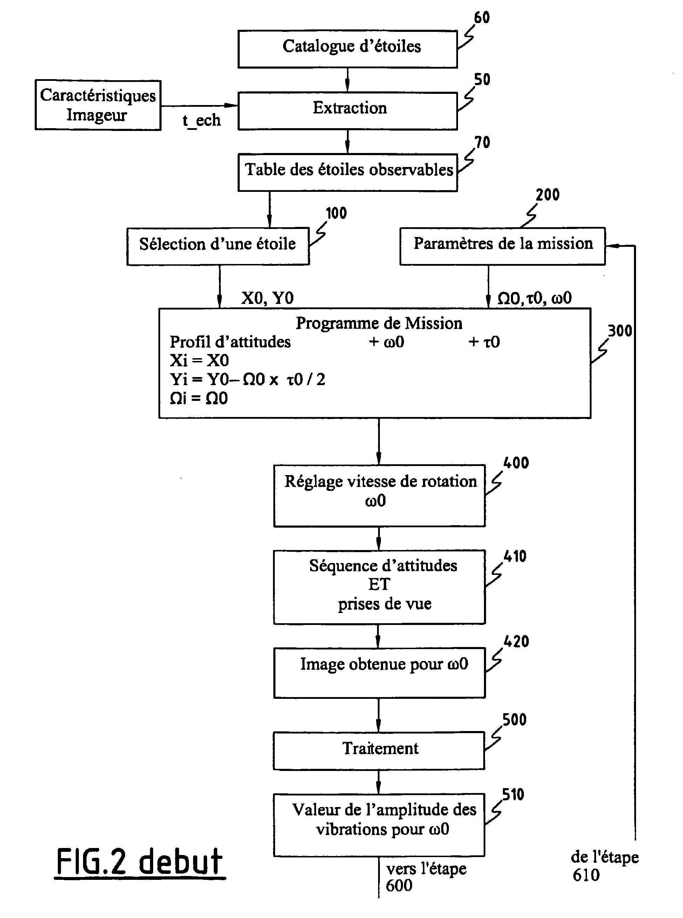

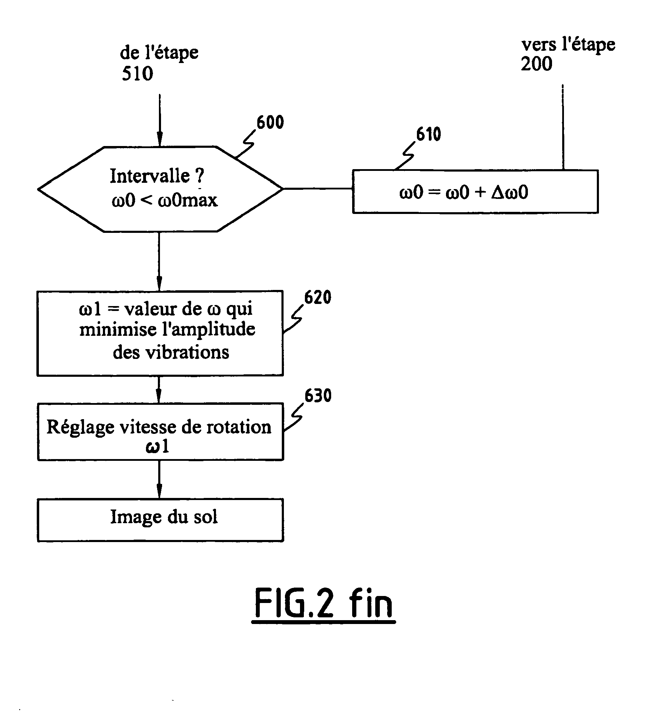

En se référant à la figure 2, à partir de la station de contrôle au sol, un opérateur élabore d'abord un programme de mission d'observation d'une étoile sélectionnée parmi des étoiles observables.

Une table regroupe les étoiles qui sont observables par le système imageur 7 du satellite 2. Par exemple, il a été estimé que, compte tenu des caractéristiques physiques du système imageur 7, le premier capteur 8, haute résolution, du satellite PLEIADES permet d'observer des étoiles dont la magnitude est entre 1,8 et 6,7 et, de préférence, entre 2,2 et 4,3. En consultant les catalogues généraux répertoriant les étoiles et leurs caractéristiques, ce dernier intervalle de magnitude regroupe environ 340 étoiles. Il a été également estimé que le second capteur 10, basse résolution, permet d'observer des étoiles dont la magnitude est entre 1,2 et 6,6, et, de préférence, entre 2,2 et 6,0. Ce dernier intervalle représente environ 1 800 étoiles observables au moyen du second capteur.

Ainsi, à partir d'une extraction 50 des informations regroupées dans les catalogues d'étoiles 60, la table 70 des étoiles observables par le système imageur 7 du satellite 2 est établie et mémorisée dans une base de données.

Compte tenu par exemple de la position du satellite 2 le long de son orbite 5 au moment où sera exécuté le programme de mission, l'opérateur sélectionne à l'étape 100 une étoile particulière dans la table des étoiles observables.

Les deux coordonnées de position de l'étoile sélectionnée sont extraites de la table 70. On notera que la position d'une étoile sur la voûte céleste est donnée par deux coordonnées, par exemple une coordonnée de déclinaison et une autre d'ascension droite dans un système de coordonnées polaires. Comme indiqué ci-dessus, pour simplifier la description, on considère que les coordonnées de l'étoile sélectionnée sont une première coordonnée X0 selon la première direction X et une seconde coordonnée Y0 selon la seconde direction Y.

A l'étape 200, l'opérateur détermine les paramètres permettant d'obtenir une image de l'étoile sélectionnée. Ainsi, pour une acquisition d'image de durée $\tau 0$, la vitesse de balayage $\Omega 0$ selon la seconde direction Y est choisie selon les deux critères suivants :

- pour être sûr que l'étoile sélectionnée se trouvera dans la fenêtre balayée lors dé l'acquisition d'une image, la valeur de la vitesse de balayage $\Omega 0$ est choisie suffisamment élevée pour que le champ angulaire balayé à la vitesse de balayage $\Omega 0$ pendant la durée $\tau 0$ soit supérieur à la précision de pointage du système d'attitude du satellite 2 ;
- D'autre part, pour qu'un nombre suffisant de lignes de l'image obtenue présentent au moins un pixel ayant été éclairé par les photons de l'étoile sélectionnée, l'étoile sélectionnée doit traverser lentement le champ angulaire élémentaire du capteur 8,10. En conséquence, la valeur de la vitesse de balayage Ω0 est choisie suffisamment faible.

Il s'agit donc de réaliser un compromis. En choisissant une vitesse de balayage Ω0 de 100 μrad/s et une durée τ de 3 secondes, le champ angulaire balayé selon la seconde direction Y sera de : Ω0 x τ0 = 300 μrad, ce qui est supérieure aux 30 μrad de la précision angulaire de pointage annoncée du système d'attitude du satellite PLEIADES. En s'affranchissant ainsi de la contrainte sur la précision de pointage, on est certain que l'image obtenue contiendra une trace de l'étoile sélectionnée. On notera que la vitesse Ω0 est ralenti par rapport à la vitesse de balayage lors de l'observation d'un site terrestre.

Simultanément, le nombre de lignes de l'image obtenue qui seront éclairées est égal au champ angulaire élémentaire du capteur 8, 10 divisé par le produit de la vitesse de balayage Ω0 par le temps d'échantillonnage t_ech. L'application numérique conduit à 1300 lignes éclairées pour une image obtenue au moyen du premier détecteur 8 haute résolution et à 400 lignes éclairées pour une image obtenue au moyen du second détecteur 10 faible résolution, le temps d'échantillonnage t_ech valant 0,1 ms.

Le profil d'attitudes du programme de mission est alors élaboré (étape 300). Il comporte une position de pointage initiale donnée par :

$$Xi = X0 \text{ et } Yi = Y0 - \Omega0.\tau0/2$$

et une vitesse de balayage Ωi égale à Ω0.

Le programme de mission comporte également la durée τ0 de l'acquisition d'image en tant que paramètre à passer au système imageur 7, et la vitesse de rotation ω0 des toupies en tant que paramètre à passer au système d'attitude 6.

Une fois élaboré, le programme de mission est transmis au satellite.

Puis, avantageusement, alors que le satellite 2 se trouve dans la partie nuit d'une orbite, portion de l'orbite rarement utilisée pour réaliser des images de la surface terrestre, le programme de mission est exécuté.

Dans une première étape 400, la consigne ω0 de vitesse de rotation des toupies des actionneurs gyroscopiques est appliquée en entrée du système d'attitude 6. Celui-ci règle la vitesse de rotation des toupies à la consigne ω0 et indique lorsque la consigne demandée est atteinte.

Puis, à l'étape suivante 410, la séquence d'attitudes indiquée par le profil d'attitudes est réalisée. Le système d'attitude oriente le satellite pour que l'axe de visée Z pointe en direction de la position de pointage initiale Xi, Yi indiquée et que le satellite tourne à une vitesse correspondant à la vitesse de balayage Ωi indiquée.

Simultanément et pendant une durée τ0, le système imageur 7 réalise une image par association des prises de vue élémentaires de la voûte céleste obtenues au cours du balayage de la fenêtre. Chaque prise de vue élémentaire correspond à l'observation de la voûte céleste à un instant donné avec le système imageur 7 ayant un champ angulaire élémentaire et un temps d'échantillonnage t_ech. La fenêtre s'étend autour de la seconde coordonnée Y0 de l'étoile sélectionnée, entre Y0-Ω0.τ0/2 et Y0+Ω0.τ0/2.

A l'issue de cette étape d'acquisition d'image, l'image obtenue 420 pour la vitesse de rotation de consigne ω0 des toupies est transmise à la station de contrôle au sol pour y être analysée (étapes 500 et 510) soit en temps réel, soit en temps différé.

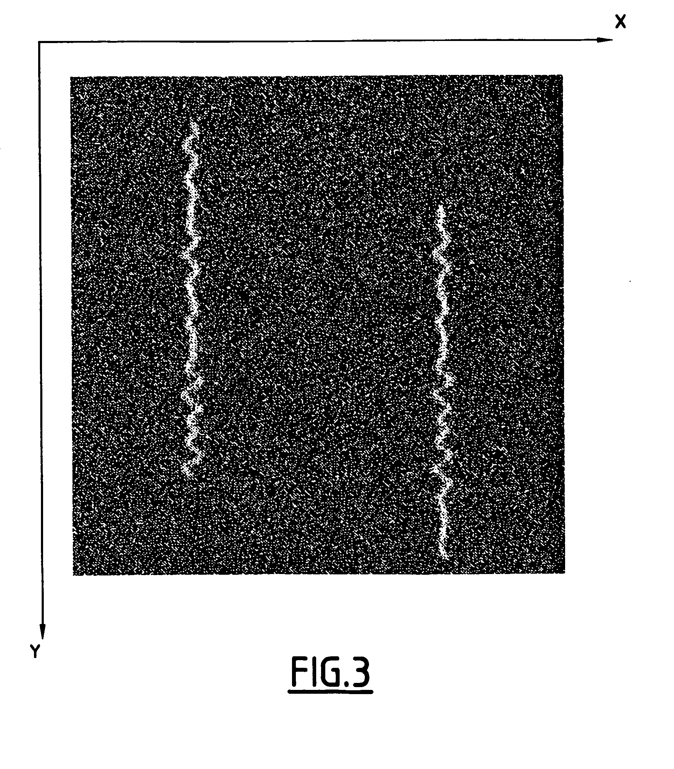

Comme cela est représenté à la figure 3, l'image obtenue de l'étoile sélectionnée comporte non pas une trace ponctuelle de l'étoile, mais une traînée. En effet, lors de la prise de vue le système imageur possède une vitesse relative par rapport à l'étoile sélectionnée, fixe sur la voûte céleste. En conséquence, plusieurs lignes de l'image obtenue présentent au moins un pixel éclairé par le flux de photons provenant de l'étoile.

La variation au cours du temps, c'est-à-dire selon la seconde direction Y, de la position selon la première direction X du pixel éclairé, ou du barycentre du groupe de pixels éclairés, est causée par l'oscillation de l'axe de visée Z sous l'action des vibrations. L'application d'un traitement statistique 500 sur la position selon la première direction X des pixels éclairés, par exemple du type calcul d'un écart à une position moyenne, conduit à une mesure de l'amplitude des vibrations pour la vitesse de rotation ω0 des toupies (étape 510). De plus, alors qu'il a été question de l'amplitude des vibrations dans ce qui précède, d'autres caractéristiques des vibrations peuvent être extraites de l'analyse des images d'étoile obtenues. Par exemple, une analyse en fréquence, du type analyse de Fourier, peut être pratiquée sur la traînée de l'étoile observée pour déterminer la fréquence, ou un spectre en fréquence, des vibrations.

On notera que le procédé selon l'invention permet de caractériser les vibrations selon la première direction X uniquement. Mais, comme il s'agit d'un phénomène vibratoire n'ayant pas de direction privilégiée, cette mesure permet de caractériser les vibrations-selon les-trois axes.

En revenant à la figure 2, pour obtenir des mesures précises des caractéristiques des vibrations, plusieurs images d'étoiles sont acquises puis analysées pour une même valeur de la vitesse de rotation ω0. Soit ces images correspondent à l'observation de la même étoile sélectionnée, soit elles correspondent à l'observation de différentes étoiles sélectionnées.

Après que plusieurs acquisitions d'image d'étoile ont été enchaînées pour une même vitesse de consigne ω0 des toupies, le programme de mission d'observation des étoiles prend fin. Le satellite peut être orienté vers la terre pour prendre des images de la surface terrestre.

En effet, à cause du temps nécessaire pour que la vitesse de rotation d'une toupie d'un actionneur gyroscopique se stabilise à la valeur de consigne ω0, le procédé de caractérisation des vibrations est, de préférence, répété pour différentes valeurs de la vitesse de rotation ω des toupies au cours d'orbites différentes. Ainsi, la mesure de l'amplitude des vibrations pour une autre vitesse de rotation des toupies sera obtenue lors de la mise en oeuvre du procédé au cours de la partie nuit d'une autre orbite.

De préférence, au cours d'une succession d'orbites, la valeur de la consigne ω0 est incrémentée à chaque orbite d'un pas prédéterminé Δω0 pour couvrir un intervalle d'intérêt entre une borne inférieure wmin et une borne supérieure ωmax de vitesse de rotation ω des toupies.

A l'étape 600, la valeur actuelle de la consigne ω0 est comparée à la borne supérieure ωmax. Si la borne supérieure de l'intervalle d'intérêt n'est pas atteinte, à l'étape 610 la valeur de la consigne ω0 est incrémentée de ΔΩ0 et le procédé est répété en réalisant un programme de mission adapté à cette nouvelle valeur de la consigne.

Lorsque la borne supérieure ωmax de l'intervalle d'intérêt est atteinte, la dépendance entre l'amplitude des vibrations et la vitesse de rotation des toupies des actionneurs gyroscopiques est établie sur l'intervalle d'intérêt. La vitesse de rotation des toupies ω1 qui minimise les vibrations est déterminée à l'étape 620. Puis, à l'étape 630, la valeur ω1 est appliquée en tant que consigne au système d'attitude 6 du satellite 2 de manière à acquérir des images de la surface terrestre qui soient de qualité optimale.

L'homme du métier constatera que le procédé selon l'invention permet l'évaluation des caractéristiques des vibrations directement sur une image obtenue par le système imageur, au moyen de traitements informatiques simples.

Le temps d'utilisation du satellite nécessaire pour la mise en oeuvre du procédé selon l'invention est compatible avec les temps morts normaux de l'utilisation d'un satellite.

Puisque l'on ne cherche par à observer un point situé au sol qui pourrait être masqué par des nuages, le procédé selon l'invention peut être mis en oeuvre à n'importe quel instant. On s'affranchit ainsi des contraintes météorologiques.

Des simulations de la mise en oeuvre du procédé selon l'invention indiquent que là où il fallait une dizaine de jours pour obtenir la dépendance de l'amplitude des vibrations en fonction de la vitesse de rotation des actionneurs gyroscopiques, il ne faut plus qu'une journée en mettant en oeuvre le procédé selon l'invention.

Si, dans le mode de réalisation actuellement préféré, le procédé selon l'invention permet l'évaluation des vibrations causées par le mouvement des toupies des actionneurs gyroscopiques, il peut également être mis en oeuvre pour évaluer des vibrations causées par d'autres dispositifs mécaniques embarqués à bord du satellite et ayant un ou plusieurs éléments mobiles dont les paramètres du mouvement, position ou vitesse, sont réglables. Il peut s'agir par exemple de roues à réaction, de moyens d'entraînement des panneaux solaires, de machines cryogéniques, etc.

**Revendications**

1. Procédé de caractérisation des vibrations affectant un satellite d'observation (2) équipé d'un système imageur ayant un axe de visée (Z) et d'un système d'attitude permettant d'orienter l'axe de visée (Z) du système imageur, **caractérisé en ce qu'**il comporte les étapes consistant à :

   - sélectionner une étoile (100) dans une liste d'étoiles observables (70) au moyen du système imageur ;
   - extraire des première et seconde coordonnées (X0, Y0) de l'étoile sélectionnée selon des première et seconde directions (X, Y) ;
   - orienter le satellite au moyen du système d'attitude de manière à ce que l'axe de visée (Z) du système imageur pointe vers la première coordonnée et balaie, selon la seconde direction, une fenêtre située autour de la seconde coordonnée de l'étoile sélectionnée ;
   - acquérir une image au moyen du système imageur durant le balayage selon la seconde direction de ladite fenêtre, l'image obtenue (420) présentant une traînée correspondant à l'étoile sélectionnée : et,
   - analyser (500) l'image obtenue pour déterminer, à partir des oscillations de la traînée, au moins une caractéristique des vibrations affectant le satellite.

2. Procédé selon la revendication 1, **caractérisé en ce que** les étapes d'orientation du satellite, d'acquisition d'une image et d'analyse (500) de l'image obtenue (420) sont répétées pour des valeurs différentes de la vitesse de mouvement (ω0) d'un élément mobile d'un dispositif embarqué à bord du satellite (2), dont la vitesse de mouvement (ω) est réglable.

3. Procédé selon la revendication 2, **caractérisé en ce que** ledit dispositif mécanique est constitué par des actionneurs gyroscopiques du système d'attitude du satellite qui comportent des toupies dont la vitesse de rotation (ω0) est réglable.

**4.** Procédé selon la revendication 2 ou la revendication 3, **caractérisé en ce qu'**une fois qu'une dépendance entre une caractéristique des vibrations et la vitesse de mouvement de l'élément mobile est établie sur un intervalle de vitesse de mouvement, la vitesse de mouvement de l'élément mobile est réglée à la valeur qui induit les plus faibles dégradations de la qualité des images.

**5.** Procédé selon l'une quelconque des revendications précédentes, **caractérisé en ce qu'**il comporte une étape de détermination (200) d'une vitesse de balayage (Ω0) pour balayer ladite fenêtre selon la seconde direction (Y) et d'une durée (τ0) pour l'étape d'acquisition d'image.

**6.** Procédé selon la revendication 5, **caractérisé en ce que** la détermination d'une vitesse de balayage (Ω0) et la détermination d'une durée (τ0) sont telles que le produit de ces deux paramètres est supérieur à une précision angulaire de pointage du système d'attitude.

**7.** Procédé selon la revendication 5 ou la revendication 6, **caractérisé en ce que** la détermination de la vitesse de balayage (Ω0) prend en compte un nombre de lignes minimum de l'image obtenue ayant au moins un pixel éclairé par l'étoile sélectionnée.

**8.** Procédé selon l'une quelconque des revendications précédentes, **caractérisé en ce qu'**il est mis en oeuvre lorsque le satellite (2) se situe sur une portion nuit de son orbite (5).

**9.** Procédé selon l'une quelconque des revendications précédentes, **caractérisé en ce que** la liste d'étoiles observables (70) est obtenue par extraction (50) à partir d'un catalogue général d'étoiles (60) donnant, entre autres, les positions et la magnitude des étoiles, et à partir des caractéristiques physiques du système imageur, telles que le temps d'échantillonnage (t_ech).

**10.** Procédé selon l'une quelconque des revendications précédentes, **caractérisé en ce que** ladite au moins une caractéristique des vibrations comprend un paramètre des vibrations parmi une amplitude, une fréquence et un spectre.

**11.** Dispositif pour la caractérisation des vibrations affectant un satellite comportant un satellite d'observation (2) équipé d'un système imageur ayant un axe de visée (Z) et d'un système d'attitude permettant d'orienter l'axe de visée (Z) du système imageur, **caractérisé en ce qu'**il comporte une installation pour la caractérisation des vibrations affectant le satellite permettant la mise en oeuvre du procédé selon l'une quelconque des revendications 1 à 10, et comportant :

- une liste d'étoiles observables (70) au moyen du système imageur ;
- un moyen de sélection d'une étoile (100) dans ladite liste ;
- un moyen d'extraction des première et seconde coordonnées (X0, Y0) de l'étoile sélectionnée selon des première et seconde directions (X. Y) ;
- un moyen d'élaboration d'un profil d'attitudes pour que, lorsque ledit profil d'attitudes est suivi, le système d'attitude du satellite oriente le satellite de sorte que l'axe de visée (Z) du système imageur pointe vers la première coordonnée et balaie, selon la seconde direction, une fenêtre située autour de la seconde coordonnée de l'étoile sélectionnée ; le système imageur permettant l'acquisition d'une image durant le balayage selon la seconde direction de ladite fenêtre, l'image obtenue (420) présentant une traînée correspondant à l'étoile sélectionnée, et,
- un moyen d'analyse permettant de déterminer, à partir des oscillations de la traînée sur l'image obtenue, au moins une caractéristique des vibrations affectant le satellites.

**Claims**

**1.** Method of characterising vibrations affecting an observation satellite (2) equipped with an imaging system having a sight axis (Z) and with an attitude system allowing the sight axis (Z) of the imaging system to be oriented, **characterised in that** it includes the steps consisting of:

- selecting a star (100) from a list of stars observable (70) by means of the imaging system;
- extracting first and second co-ordinates (X0, Y0) of the selected star in first and second directions (X, Y);
- orienting the satellite by means of the attitude system so that the sight axis (Z) of the imaging system points towards the first co-ordinate and scans, in the second direction, a window located around the second co-ordinate of the selected star;
- acquiring an image by means of the imaging system during the scanning of said window in the second direction, the image obtained (420) having a trail corresponding to the selected star; and
- analysing (500) the obtained image to determine, from the oscillations of the trail, at least one characteristic of the vibrations affecting the satellite.

2. Method according to claim 1, **characterised in that** the steps of orienting the satellite, of acquiring an image and of analysis (500) of the image obtained (420) are repeated for different values of the speed of movement ($\omega 0$) of a movable element of a device carried on board the satellite (2), the speed of movement ($\omega$) of which is controllable.

3. Method according to claim 2, **characterised in that** said mechanical device is constituted by gyroscopic actuators of the attitude system of the satellite which include gyro wheels, the speed of rotation ($\omega 0$) of which is controllable.

4. Method according to claim 2 or claim 3, **characterised in that** once a dependency between a characteristic of the vibrations and the speed of movement of the movable element has been established over a movement speed range, the speed of movement of the movable element is controlled to the value which causes the most minor deterioration in the quality of the images.

5. Method according to any one of the preceding claims, **characterised in that** it includes a step of determination (200) of a scanning speed ($\Omega 0$) for scanning said window in the second direction (Y) and of a duration ($\tau 0$) for the image acquisition step.

6. Method according to claim 5, **characterised in that** the determination of a scanning speed ($\Omega 0$) and the determination of a duration ($\tau 0$) are such that the product of those two parameters is greater than the angular pointing accuracy of the attitude system.

7. Method according to claim 5 or claim 6, **characterised in that** the determination of the scanning speed ($\Omega 0$) takes into account a minimum number of lines of the image obtained, having at least one pixel illuminated by the selected star.

8. Method according to any one of the preceding claims, **characterised in that** it is employed when the satellite (2) is located in a night portion of its orbit (5).

9. Method according to any one of the preceding claims, **characterised in that** the list of observable stars (70) is obtained by extraction (50) from a general catalogue of stars (60) giving, *inter alia,* the positions and magnitudes of the stars and from the physical characteristics of the imaging system, such as the sampling time ($t\_ech$).

10. Method according to any one of the preceding claims, **characterised in that** said at least one characteristic of the vibrations comprises a parameter of the vibrations selected from amplitude, frequency and spectrum.

11. Device for characterising vibrations affecting an observation satellite, including a satellite (2) equipped with an imaging system having a sight axis (Z) and with an attitude system allowing the sight axis (Z) of the imaging system to be oriented, **characterised in that** it includes an arrangement for characterising the vibrations affecting the satellite which allows the method according to any one of claims 1 to 10 to be implemented, and including:

- a list of stars observable (70) by means of the imaging system;
- a means of selecting a star (100) from said list;
- a means of extracting first and second co-ordinates (X0, Y0) of the selected star in first and second directions (X, Y);
- a means of elaborating a sequence of attitudes so that, when said sequence of attitudes is followed, the attitude system of the satellite orients the satellite so that the sight axis (Z) of the imaging system points towards the first co-ordinate and scans, in the second direction, a window located around the second co-ordinate of the selected star, the imaging system allowing acquisition of an image during the scanning of said window in the second direction, the image obtained (420) having a trail corresponding to the selected star, and
- a means of analysis making it possible to determine, from the oscillations of the trail on the image obtained, at least one characteristic of the vibrations affecting the satellite.

**Patentansprüche**

1. Verfahren zur Charakterisierung von Schwingungen, die einen Beobachtungssatelliten (2) beeinflussen, der mit einem eine Peilachse (Z) aufweisenden bildgebenden System und einem Fluglagensystem ausgerüstet ist, das eine Ausrichtung der Peilachse (Z) des bildgebenden Systems gestattet, **dadurch gekennzeichnet, dass** es die Schritte umfasst, die darin bestehen:

- Auswählen eines Sterns (100) aus einer Liste von mittels des bildgebenden Systems beobachtbaren Sternen (70);
- Extrahieren einer ersten und einer zweiten Koordinate (X0, Y0) des ausgewählten Sterns gemäß einer ersten und zweiten Richtung (X, Y) ;
- Ausrichten des Satelliten mittels des Fluglagensystems derart, dass die Peilachse (Z) des bildgebenden Systems in Richtung der ersten Koordinate zeigt und gemäß der zweiten Richtung ein Fenster abtastet, das um die zweite Koordinate des ausgewählten Sterns herum angeordnet ist;

- Beschaffen eines Bildes mittels des bildgebenden Systems während der Abtastung des Fensters gemäß der zweiten Richtung, wobei das erhaltene Bild (420) eine Spur entsprechend dem ausgewählten Stern aufweist; und

- Analysieren (500) des erhaltenen Bildes, um aus den Schwingungen der Spur mindestens eine kennzeichnende Größe der den Satelliten beeinflussenden Schwingungen zu bestimmen.

2. Verfahren nach Anspruch 1, **dadurch gekennzeichnet, dass** die Schritte der Ausrichtung des Satelliten, der Beschaffung eines Bildes und der Analyse (500) des erhaltenen Bildes (420) für unterschiedliche Werte der Geschwindigkeit der Bewegung (ω0) eines beweglichen Elements einer an Bord des Satelliten (2) mitgenommenen Vorrichtung wiederholt werden, deren Geschwindigkeit der Bewegung (ω) einstellbar ist.

3. Verfahren nach Anspruch 2, **dadurch gekennzeichnet, dass** die mechanische Vorrichtung von gyroskopischen Betätigungselementen des Fluglagensystems des Satelliten gebildet wird, die Kreisel umfassen, deren Drehgeschwindigkeit (ω0) einstellbar ist.

4. Verfahren nach Anspruch 2 oder Anspruch 3, **dadurch gekennzeichnet, dass**, sobald eine Abhängigkeit zwischen einer kennzeichnenden Größe der Schwingungen und der Geschwindigkeit der Bewegung des beweglichen Elements über ein Intervall der Bewegungsgeschwindigkeit erstellt ist, die Geschwindigkeit der Bewegung des beweglichen Elements auf den Wert eingestellt wird, der die geringsten Verschlechterungen der Bildqualität induziert.

5. Verfahren nach einem beliebigen der vorhergehenden Ansprüche, **dadurch gekennzeichnet, dass** es einen Schritt der Bestimmung (200) einer Abtastgeschwindigkeit (Ω0) umfasst, um das Fenster gemäß der zweiten Richtung (Y) und einer Dauer (τ0) für den Schritt der Beschaffung des Bildes abzutasten.

6. Verfahren nach Anspruch 5, **dadurch gekennzeichnet, dass** die Bestimmung einer Abtastgeschwindigkeit (Ω0) und die Bestimmung einer Dauer (τ0) derart sind, dass das Produkt dieser zwei Parameter größer als eine Winkelgenauigkeit der Ausrichtung des Fluglagensystems ist.

7. Verfahren nach Anspruch 5 oder Anspruch 6, **dadurch gekennzeichnet, dass** die Bestimmung der Abtastgeschwindigkeit (Ω0) eine minimale Anzahl von Linien des erhaltenen Bildes berücksichtigt, die mindestens ein durch den ausgewählten Stern erhellten Pixel aufweist.

8. Verfahren nach einem beliebigen der vorhergehenden Ansprüche, **dadurch gekennzeichnet, dass** es durchgeführt wird, wenn der Satellit (2) eine Position auf einem Nachtbereich seiner Umlaufbahn (5) einnimmt.

9. Verfahren nach einem beliebigen der vorhergehenden Ansprüche, **dadurch gekennzeichnet, dass** die Liste der beobachtbaren Sterne (70) durch Extraktion (50) aus einem allgemeinen Katalog von Sternen (60), der unter anderem die Positionen und die Größe der Sterne angibt und aus physikalischen Kenngrößen des bildgebenden Systems, wie aus der Zeit der Probennahme (t_ech) erhalten wird.

10. Verfahren nach einem beliebigen der vorhergehenden Ansprüche, **dadurch gekennzeichnet, dass** die mindestens eine Kenngröße der Schwingungen einen Schwingungsparameter aus einer Amplitude, einer Frequenz und einem Spektrum umfasst.

11. Vorrichtung für die Charakterisierung von Schwingungen, die einen Beobachtungssatelliten beeinflussen, umfassend einen Satelliten, der mit einem eine Peilachse (Z) aufweisenden bildgebenden System und einem Fluglagensystem ausgerüstet ist, das die Ausrichtung der Peilachse (Z) des bildgebenden Systems gestattet, **dadurch gekennzeichnet, dass** sie eine Anlage zur Charakterisierung der den Satelliten beeinflussenden Schwingungen umfasst, die die Durchführung des Verfahrens nach einem der Ansprüche 1 bis 10 gestattet und umfasst:

- eine Liste von mittels des bildgebenden Systems beobachtbaren Sternen (70);
- ein Mittel zum Auswählen eines Sterns (100) aus der Liste;
- ein Mittel zum Extrahieren einer ersten und einer zweiten Koordinate (X0, Y0) des ausgewählten Sterns gemäß einer ersten und einer zweiten Richtung (X, Y);
- ein Mittel zur Ausarbeitung eines Fluglagenprofils, damit, wenn das Fluglagenprofil verfolgt wird, das Fluglagensystem des Satelliten den Satelliten so ausrichtet, dass die Peilachse (Z) des bildgebenden Systems in die Richtung der ersten Koordinate zeigt und gemäß einer zweiten Richtung ein um die zweite Koordinate des ausgewählten Sterns angeordnetes Fenster abtastet, wobei das bildgebende System die Beschaffung eines Bildes während der Abtastung gemäß der zweiten Richtung des Fensters gestattet und das erhaltene Bild (420) eine Spur entsprechend dem ausgewählten Stern aufweist, und

- ein Mittel zur Analyse, das aus den Schwingungen der Spur auf dem erhaltenen Bild mindestens eine Kenngröße der den Satelliten beeinflussenden Schwingungen zu bestimmen erlaubt.

FIG.1

Catalogue d'étoiles  `60`

Caractéristiques
Imageur

t_ech

Extraction  `50`

Table des étoiles observables  `70`

Sélection d'une étoile  `100`

Paramètres de la mission  `200`

X0, Y0

$\Omega0, \tau0, \omega0$

Programme de Mission  `300`
Profil d'attitudes          $+ \omega0$          $+ \tau0$
$Xi = X0$
$Yi = Y0 - \Omega0 \times \tau0 / 2$
$\Omega i = \Omega0$

Réglage vitesse de rotation
$\omega0$  `400`

Séquence d'attitudes
ET
prises de vue  `410`

Image obtenue pour $\omega0$  `420`

Traitement  `500`

Valeur de l'amplitude des
vibrations pour $\omega0$  `510`

vers l'étape
600

de l'étape
610

**FIG.2 debut**

de l'étape
510

vers l'étape
200

$600$

Intervalle ?
$\omega 0 < \omega 0 max$

$610$

$\omega 0 = \omega 0 + \Delta \omega 0$

$620$

$\omega 1 =$ valeur de $\omega$ qui
minimise l'amplitude
des vibrations

$630$

Réglage vitesse de rotation
$\omega 1$

Image du sol

## FIG.2 fin

FIG.3

# EP 2 113 460 B1

## RÉFÉRENCES CITÉES DANS LA DESCRIPTION

**Littérature non-brevet citée dans la description**

- **JANSCEK K et al.** Integrated camera motion compensation by real-time image motion tracking and image deconvolution. *ADVANCED INTELLIGENT MECHATRONICS. PROCEEDINGS, 2005 IEEE/ASME INTERNATIONAL CONFERENCE ON MONTEREY,* 24 Juillet 2005, ISBN 978-0-7803-9047-8, 1437-1444